# EUROPEAN PATENT SPECIFICATION

(11) **EP 0 474 490 B1**
(45) Date of publication and mention of the grant of the patent: **06.12.1995**
(21) Application number: 91308133.7
(22) Date of filing: 05.09.1991
(51) Int. Cl.: H01Q 9/04, H04B 7/08

(54) **Antenna assembly**
Antennenanordnung
Dispositif d'antenne

(30) Priority: 06.09.1990 GB 9019486
(43) Date of publication of application: 11.03.1992
(73) Proprietor: AT&T GLOBAL INFORMATION SOLUTIONS INTERNATIONAL INC., Dayton, Ohio 45479 (US)
(72) Inventor: Busking, Erik Bert, NL-2564 TK Den Haag (NL)
(74) Representative: Robinson, Robert George

(56) References cited:
- EP-A- 0 184 383
- EP-A- 0 318 665
- GB-A- 2 176 660
- US-A- 4 379 296
- US-A- 4 538 153
- US-A- 4 800 393

## Description

This invention relates to antenna assemblies for use in radio communication systems.

It is known in radio communication systems to provide an antenna diversity capability, whereby two antennas are available. The quality, for example, of the received signal strength of the signals received by the two antennas may be compared, and the antenna having the better received signal strength selected for use. Such an arrangement is disclosed in European Patent Application No. 0 318 665.

It has recently been proposed to utilize radio waves for communication in a wireless local area network (LAN). A suitable frequency band for a radio LAN lies in the 902 to 928 MHz range. However, due to multipath fading and interference, it is found that the probability of data errors is unacceptable if only one antenna is used for the network station. Thus, it is desirable to utilize two alternatively selectable antennas.

The document US-A-4 538 153 discloses (see especially Figs. 1 and 2A, and the associated description at column 1, lines 6-34) a space diversity reception system including a pair of antennas spaced apart by a distance longer than several wavelengths and coupled to a diversity reception system including a pair of antennas spaced apart by a distance longer than several wavelengths and coupled to a diversity reception circuit which combines the antenna signals for detection.

The document EP-A-0 184 383 discloses a PBX system or a local area network wherein a plurality of remote terminals communicate with a base station via a wireless communications medium. The terminals have adaptive power control to reduce interference levels.

It is the object of the present invention to provide an antenna assembly, suitable for use in a wireless LAN, having two antennas which are selectively operable and which is of compact construction.

Therefore, according to the present invention, there is provided an antenna assembly as set forth in claim 1.

It will be appreciated that an antenna assembly according to the invention can be implemented as a compact construction since the first and second antennas can be closely positioned, with the detuning provision assisting towards maintaining substantial perpendicularity between the antenna polarizations.

Two embodiments of the present invention will now be described by way of example, with reference to the drawings:-

Fig. 1 is a top view, partially in schematic form, of a first embodiment of an antenna assembly according to the invention.

Fig. 2 is a perspective view of a cut-away portion of the antenna assembly shown in Fig. 1.

Fig. 3 is a top view, partially in schematic form, of a first portion of a second embodiment of an antenna assembly according to the invention.

Fig. 4 is a sectional view of a second portion of the second embodiment of an antenna assembly according to the invention.

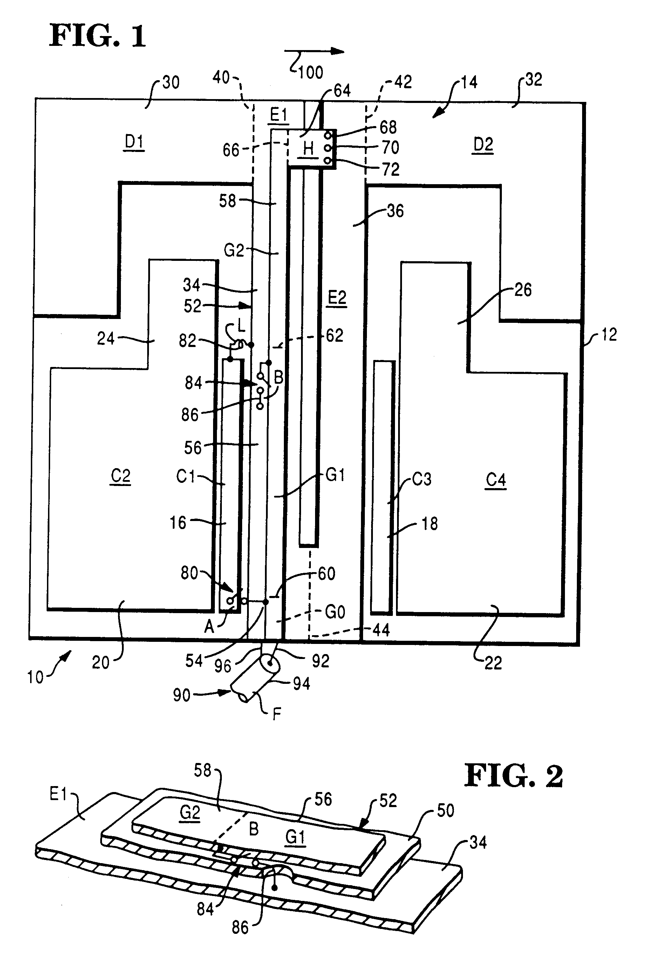

A first embodiment of an antenna assembly according to the invention will be described with reference to Figs. 1 and 2. Referring first to Fig. 1, there is shown a view of the antenna assembly 10, with certain parts thereof being illustrated only schematically, as an aid to clarity of the drawing. The antenna assembly 10 includes a dielectric substrate 12, on which are provided a generally T-shaped conductive area 14, two conductive strips 16 and 18, indicated by references C1 and C3, and two generally rectangular areas 20 and 22, indicated by references C2 and C4, and having extension portions 24 and 26. The conductive areas may be formed of copper.

The T-shaped conductive area 14 includes two generally L-shaped areas 30 and 32, indicated by references D1 and D2, and two strip shaped areas 34 and 36 indicated by references E1 and E2. The dashed lines 40, 42, and 44 indicate the boundaries of the conductive areas which abut thereon. Overlying the strip-shaped area 34, and separated therefrom by a dielectric layer 50 (Fig. 2), there is provided a conductive strip 52 having a lower portion 54 (as seen in Fig. 1), a central portion 56 and an upper portion 58. The strip portions 54, 56, and 58 are indicated by references G0, G1, and G2 and are bounded by dashed lines 60 and 62. The upper strip portion 58 has an interconnection region 64, indicated by reference H, bounded by dashed line 66, which is separated from the plane of the conductive area 14 by the dielectric layer 50, and which is electrically connected to the underlying conductive strip 36 by conductive leads 68, 70, and 72, which extend through the dielectric layer 50.

In an alternative construction, a printed circuit board could be used as the substrate for the antenna assembly, with the elements D1, D2, E1, and E2 provided on one side thereof, and the elements C1 to C4, G0 to G2, and H provided on the other side thereof.

The conductive strip 16 is connected adjacent one end thereof to the conductive strip 54 by a switch 80, also indicated by reference A. The strip 16 is also connected, at the other end thereof to the conductive strip 34 by an inductor 82, also indicated by reference L. The upper end (as seen in Fig. 1) of the strip portion 56 is connected by a switch 84, also indicated by reference B, and a lead 86 which passes through the dielectric layer 50 (as seen in Fig. 2), with the conductive strip 34. In practice, the switches 80 and 84 would be implemented as electronic switches.

A coaxial feed cable 90, also indicated by reference F, has its inner conductor 92 connected to the lower portion 54 of the conductive strip 52 and its outer conductor 94 connected to the strip-shaped area 34 by a conductor 96.

It should be understood that the antenna assembly 10 implements two antennas having polarization directions which are substantially perpendicular. The first antenna is a dipole antenna consisting essentially of the two L-shaped areas 30 and 32, referred to as D1 and D2. The second antenna is a monopole antenna consisting essentially of the conductive strip 16, referred to as C1. When the switches 80 and 84 (switches A and B) are both open, the dipole antenna is operative and when the switches 80, 84 are both closed, the monopole antenna is operative. Although referred to as a monopole antenna, it will be appreciated by those skilled in the art that such antenna is effective as a dipole antenna, with the monopole portion (essentially the conductive strip 16 (C1)) serving as one dipole element and the feed cable 90 as the other dipole element.

In more detail, the dipole antenna, consisting essentially of the (folded) quarter wavelength dipole elements D1 and D2, incorporates a balun (balanced-to-unbalanced) device consisting essentially of the strips E1 and E2 with the strip E1 also serving as the backplane of the microstrip line (G0, G1, G2)/E1, it being remembered that the conductive strip 52 (G0, G1, G2) is connected to the inner conductor 92 of the coaxial cable 90, and the conductive strip 34 (E1) is connected to the outer conductor 94. Also, the conductive area H interconnects the strips G2 and E2 at their upper ends (as seen in Fig. 1), the strips E1 and E2 are interconnected at their lower ends as indicated by the dashed line 44, the strip E1 is connected to the dipole element D1 as indicated by the dashed line 40, and the strip E2 is connected to the dipole element D2 as indicated by the dashed line 42. Note that the lengths of the elements D1, D2, E1 and E2 are each one-quarter of a wavelength of the relevant radio frequency in free air. As is generally known, where two dipole elements are fed by respective conductors of a coaxial cable or transmission line, a balun device includes an added conductive element (generally, one quarter wavelength) connected to one of the dipole elements, which balances out undesired currents in the conductor feeding the other dipole element. The strip line portion G1 is of an electrical length of one-quarter of a wavelength of the relevant radio frequency due to the presence of the dielectric material 50 (dielectric constant greater than 1). The physical length of G1 is therefore less than that of the other one-quarter wavelength elements mentioned, namely D1, D2, E1 and E2. Also, it should be noted that because of the bent shape of the elements D1 and D2 and the utilization of the upper portions of the elements E1 and E2 as effectively part of the dipole elements D1 and D2, the physical lengths of the dipole elements D1 and D2 are shown in Fig. 1 as less than the physical lengths of the elements E1, E2.

The monopole antenna, consisting essentially of the conductive strip C1, also includes an impedance matching passive monopole element C2 (conductive area 20), which also radiates, and an inductive element L (shown as coil 82). A monopole counterpart element C3 (conductive area 18) and a passive monopole counterpart element C4 (conductive area 22), are also provided to form a symmetrical structure. however, any or all of the elements C2, C3, C4, and L may be omitted depending on performance requirements.

It will be appreciated that both the dipole antenna (essentially D1, D2) and the monopole antenna (essentially C1) can be used for transmitting or receiving, since any antenna can transmit or receive. Since symmetry and radiation patterns are the same for both directions, the subsequent explanation of the antenna assembly 10 will consider the transmit direction only.

With both switches A and B (80 and 84) open, the dipole antenna (essentially D1 and D2) is in operation. The RF energy is provided over the coaxial cable F and transferred over the strip transmission line formed by the strips G0, G1, and G2 and backplane strip E1. The upper end of the strip G2 (as seen in Fig. 1) is connected to the extension region H which is connected to the upper end of the strip E2. Thus, the RF source voltage exists between both ends of E1 and E2 as if the source were located there. The balun E1 and E2 has a high impedance between its ends for differential-mode. The balun also has a high impedance for common-mode, but this mode is substantially not excited by the source, because the microstrip (G0, G1, G2)/E1 transports wave energy to the end at H. When the dipole D1 and D2 is connected in, the ratio between the common-mode impedances of the dipole (low) and balun (high) results in an even lower common-mode voltage. Thus, the RF energy is substantially entirely transferred to the dipole in differential-mode, whereby the antenna assembly radiates an E-field in the direction shown by the arrow 100. In practice, a small amount of energy is transferred to common-mode, but this only slightly affects the polarization.

It will be appreciated that the presence of the counterpart elements C3 and C4 makes the electromagnetic environment of the dipole symmetrical with the respect of the plane of symmetry of the dipole.

When both switches A and B are closed the monopole antenna (essentially C1) is in operation. The Rf energy applied over the coaxial cable F is transferred via the microstrip line G0/E1 through the switch A to the monopole C1. The impedance of the monopole is matched by means of the inductance L (82) and the passive monopole element C2 (20). The switch B prevents any RF energy from being transferred to the dipole D1, D2. The microstrip G1/E1 does not form a load at the switch A because it is a quarter wavelength microstrip line short-circuited by the switch B. Note that, as discussed hereinabove, the physical length of G1 is less than that of the balun element E1. The polarization of the transmitted monopole antenna signal would tend to be disturbed by the presence of the dipole antenna D1 and D2, which acts as a resonator coupled to the monopole antenna. This arises, since, if the dipole antenna D1 and D2 were in tune with the transmitted RF signal, it would pick up RF energy from the monopole antenna, and transmit it with an undesired polarization. According to the present invention, however, the dipole is detuned automatically when the switch B is closed, since the short-circuited microstrip G2/E1 is connected to the dipole, making it resonate at a different frequency, and thus rendering it practically immune to the signals transmitted by the monopole antenna. It will be appreciated that the switch B has three functions: when on, it excludes RF energy from the dipole D1, D2; it creates a high impedance of G1 at the location of the switch A and it detunes the dipole D1 and D2.

It will be appreciated that the switches A and B have inherent inductance. The inductance of the switch A is accounted for in the impedance matching of the monopole antenna. The inductance of the switch B may be tuned out by a series-connected capacitor (not shown in Fig. 1).

Some optimizations of the above-described embodiment will now be mentioned. Firstly, when the monopole antenna is the main transmitting antenna, the impedance of the switch B can be arranged to permit a small amount of energy to pass to the dipole antenna, such that a correction signal is transmitted tending to assist in making the polarization of the total transmitted signal approximately perpendicular to that of the dipole.

As another optimization, where the switch B effects a full short-circuit, as in the Fig. 1 embodiment, the position of the switch B may be varied along the length of the strip 52 to deviate from a quarter wavelength in order to provide a designed impedance at its connection point with the switch A.

It is also possible to effect the above-mentioned two optimizations simultaneously, whereby both the impedance and location of the switch B can be varied. Thus, when the impedance of the switch B is varied, the impedance of G1 at the connection with switch A is not infinite but has a finite value (mainly reactive with a small real part resulting from the "leak" to the dipole and due to reactance in switch B). This has two effects: first, in matching of the monopole antenna, this has to be accounted for, and second, the amplitude and phase of the energy radiated by the monopole antenna are slightly changed. In optimizing, both these effects are taken into account, resulting in a properly matched antenna with maximal difference in polarization between monopole and dipole operation (attainable with these optimization parameters). As a further option the length of the microstrip G2/E2 can be varied to assist in transmitting a proper correction signal, as well as detuning the dipole.

Although the first embodiment was described as being constructed on an insulating substrate, of as a two-sided printed circuit board, it will be appreciated that other constructions are possible for the antenna assembly 10. Thus the dipole D1 and D2 and monopole C1 could be formed as rods, while the microstrip line (G0, G1, G2)/E1 could be formed by a coaxial cable. Alternatively the antenna assembly could be constructed from a dielectric (plastics) box having interior metalizations to form the antenna elements.

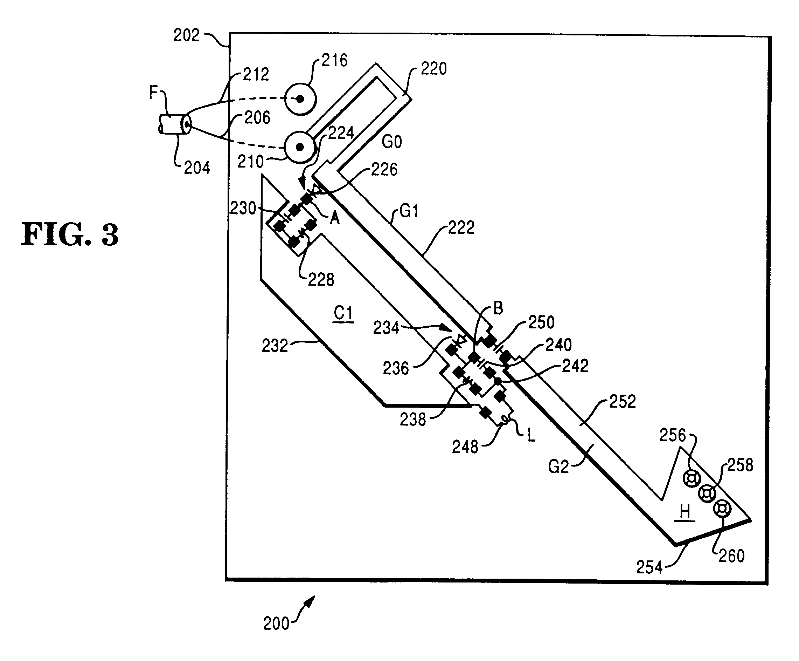

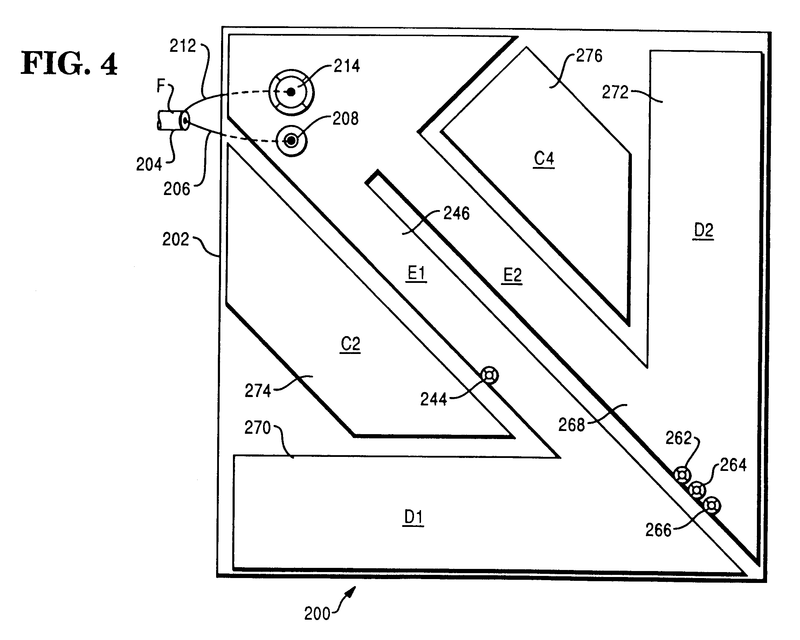

A second embodiment of an antenna assembly 200 according to the invention, incorporating certain of the optimizations discussed hereinabove, will now be described, with reference to Figs. 3 and 4. The antenna assembly 200 is formed on two sides of a printed circuit board 202, which acts as a dielectric substrate, as in one form of the first embodiment. Fig. 3 is a top view of the board 202, showing the conductive areas formed thereon, and resistors, capacitors and an inductor indicated schematically but which would be provided as discrete components, mounted on the printed circuit board 202. Fig. 4 is a view of the other side of the printed circuit board 202, showing the conductive areas provided thereon, it being appreciated that in the formed antenna assembly 200, Fig. 3 overlies Fig. 4 in the orientation shown with the dielectric material of the board 202 lying between the conductive areas shown in Fig. 3 and 4.

To assist in comparing the components of the second embodiment with corresponding components of the first embodiment, the letter references for switches A and B, monopole C1, passive monopole C2, passive monopole counterpart C4, dipole D1 and D2, balun E1 and E2, cable F, interconnection H, and inductor L are also utilized in Figs. 2 and 3. In the second embodiment, sufficient symmetry is achieved without the use of a monopole counterpart element C3.

With the above in mind, the antenna assembly 200 will now be described. A coaxial cable 204 (cable F) has its inner conductor connected via a lead 206 which extends from the lower side of the board 202, through a hole (not shown) in a conductive area 208 on the power side of the board 202 to be soldered to a contact area 210 (Fig. 3) provided on the upper side of the board 202. The outer conductor of the cable 204 is connected by a lead 212 which extends through a hole (not shown) in the conductive contact area 214, and through the material of the board 202 to contact the conductive area 216 to which the end of the lead 212 is soldered.

Thus, the inner conductor of the cable 204 is electrically connected to the contact area 210, which connects with a generally U-shaped strip 220, forming the strip G0. The strip 220 interconnects with a straight strip 222, forming the strip G1. Adjacent the junction of the strips 220 and 222, is provided a switch 224 (switch A), including a diode 226, connected to a parallel combination of a resistor 228 and a capacitor 230, which are individually connected to a conductive area 232, forming the monopole C1. The other end of the strip 222 is connected to a switch 234 (switch B) which includes a diode 236 connected to a parallel combination of a resistor 238 and a capacitor 240, which are commonly connected to a contact area 242 which extends through the board 202 to contact a conductive area 244 on the lower side of the board, which connects with a conductive area 246 (balun element E1).

On the upper side of the board 202 (Fig. 3), the contact area 242 is connected to one end of an inductor 248 (inductance L) the other end of which is connected to the monopole conductive area 232.

The conductive strip 222 is also connected via a capacitor 250 to a conductive strip 252, forming the strip G2, the other end of which connects to a conductive area 250 (interconnection H). The conductive area 250 is connected by conductive contact areas 256, 258, and 260, which extend through the board 202 to connect with contact areas 262, 264, and 266 which are connected to a conductive area 268, forming balun element E2.

On the lower side of the board 202 (Fig. 4) the conductive area 246 connects with a conductive area 270, which forms dipole element D1, and the conductive area 268 connects with a conductive area 272 forming dipole element D2. A conductive area 274 forms the passive monopole C2, and a conductive area 276 forms the passive monopole counterpart C4.

The operation of the second embodiment will now be described. It should be understood that the switches 224 and 234 (switches A and B) are controlled by DC voltages which are applied to the inner conductor of the cable 204, and which are fed via the lead 206 to the contact area 210 (Fig. 3). When a positive voltage is applied between the inner and outer conductor of the cable 204, the diodes 226 and 236 are rendered conductive (switches A and B are closed), and the monopole antenna C1 is operative. The DC current flows via the lead 206, contact area 210, strip 220, diode 226, resistor 228, monopole element C1, coil 248, contact area 242, contact area 244 (Fig. 3) to the balun element E1 and then via contact area 214 and lead 212 back to the outer conductor of the cable 204. RF signals are now transferred between element G0 and the monopole element C1.

Also, when a positive DC voltage is applied between the inner and outer conductor of the cable 204, the switch 234 (switch B) is rendered conductive, since the diode 236 is forward biased. Thus, DC current flows from the inner conductor of the cable 204, through the conductive strips G0 and G1, the diode 236, the resistor 238, the contact areas 242 and 244, the conductive element E1, the contact areas 214, 216 and then back via the lead 212 to the outer conductor of the cable 204. Also, RF signals passing through microstrip line G1/E1 are substantially short-circuited, yielding a low energy transfer to the dipole D1 and D2 and an almost total reflection of the signal over G1/E1 is the opposite direction, back to switch A. Also, as in the first embodiment, the substantially short-circuited microstrip G2/E1 is connected to the dipole D1 and D2, thereby detuning it.

When a negative DC voltage is applied between the inner and outer conductors of the cable 204, only a small leakage current will flow through the diodes 226 and 236 which are considered to be in the OFF state. RF energy transferred between G0 and C1 will be low, whereas between G0 and G1 it will be high, such that substantially all RF energy flows to dipole D1, D2, with the capacitor 250 acting as a low impedance to such RF energy.

It will be appreciated that the capacitor 250 acts as an isolator for DC voltages. For RF signals, it acts as a conductor and/or tuning element, as discussed hereinabove in connection with the opitimization possibilities for the first embodiment. It will also be appreciated that the coil 248 serves to conduct DC to enable the diode 226 to be biased, and also acts as an inductor L for RF signals, thereby assisting in impedence matching for the monopole antenna.

It should be understood that when the antenna assembly 200 is utilized in a radio LAN, transmitting is effected only with the dipole antenna to prevent high RF current from damaging the diodes 226, 236. In the receive mode, either antenna may be used.

Although the described antenna assemblies are suitable for use in radio LANs, their use is not restricted thereto, and the antenna assemblies may be employed generally in radio communication systems.

With regard to the physical construction, an epoxy/glass printed circuit board with surface mounted components would be suitable for RF frequency bands between about 500 MHz and 1500 MHz. Above these frequencies teflon/glass may be used up to about 3 GHz. Below these frequencies a physical construction using rods and coaxial cable may be used, rather than a printed circuit board construction.

## Claims

1. An antenna assembly including first (D1, D2) and second (C1) antennas having different polarization directions, characterized by switching means (A,B) adapted to render said first antenna (D1, D2) or said second antenna (C1) selectively operative, in that said first antenna is a dipole antenna (D1,D2), and said second antenna is a monopole antenna (C1), in that said dipole antenna includes first and second dipole elements (D1, D2), in that said assembly includes transmission line means ((G0, G1, G2)/(E1), H) adapted to supply signals to be transmitted to said first and second dipole elements (D1,D2), and balun means (E1,E2), wherein said transmission line means includes first, second and third interconnected conductive portions (G0/E1, G1/E1, G2/E1) separated by dielectric material (50) from a fourth conductive portion (E1) forming a part of said balun means (E1, E2), in that signals to be transmitted are coupled to said first transmission line portion (G0/E1), and in that said switching means includes first and second switches (A,B) spaced apart on said transmission line means, whereby operation of said first and second switches (A,B) to render said monopole antenna (C1) operative enables said third transmission line portion (G2/E1) to detune said dipole antenna (D1,D2).

2. An antenna assembly according to claim 1, characterized in that said transmission line means incudes a microstrip transmission line ((G0,G1,G2)/(E1),H), and in that said first, second, third and fourth conductive portions include respective first, second and third and fourth conductive strips (G0,G1,G2,E1).

3. An antenna assembly according to claim 1 or claim 2, characterized in that said first and second switches (A,B) are located adjacent opposite ends of said second transmission line portion (G1/E1).

4. An antenna assembly according to claim 3, characterized in that said assembly includes a printed circuit board (12,202) constituting said dielectric material (50), and in that said dipole elements (D1, D2), said monopole antenna (C1) and said balun means (E1, E2) are provided as electrically conductive regions on said printed circuit board (12,202).

5. An antenna assembly according to claim 4, characterized in that a passive monopole matching and radiating element (C2) is provided as a further conductive area on said printed circuit board.

6. An antenna assembly according to claim 5, characterized in that said first switching device (A) includes a first diode (226) having a first terminal connected to said second conductive strip (G1) and a second terminal connected to a parallel-connected first capacitor (230) and first resistor (228) connected to said monopole antenna (C1), in that said second switching means (B) includes a second diode (236) having a first terminal connected to said second conductive strip (G1) and a second terminal connected via a parallel-connected second capacitor (240) and second resistor (238) to said fourth conductive strip (E1), and in that said second conductive strip (G1) is connected to said third conductive strip (G2) via third capacitor (250).

7. An antenna assembly according to claim 6, characterized in that an inductor (L) is coupled between said fourth conductive strip (E1) and said monopole antenna (C1).

8. An antenna assembly according to claim 7, characterized in that a coaxial feed cable (F) has its inner conductor connected to said first conductive strip (G0) and its outer conductor connected to said fourth conductive strip (E1).

## Patentansprüche

1. Eine Antennenanordnung, die eine erste (D1, D2) und eine zweite (C1) Antenne mit unterschiedlichen Polarisationsrichtungen umfaßt, dadurch gekennzeichnet, daß eine Schalteinrichtung (A, B) ausgelegt ist, wahlweise die erste Antenne (D1, D2) oder die zweite Antenne (C1) betriebsfähig zu machen, daß die erste Antenne eine Dipolantenne (D1, D2) und die zweite Antenne eine Monopolantenne (C1) ist, daß die Dipolantenne ein erstes und ein zweites Dipolelement (D1, D2) umfaßt, daß die Anordnung eine Übertragungsleitungseinrichtung ((G0, G1, G2)/(E1), H) zum Zuführen von zu dem ersten und dem zweiten Dipolelement (D1, D2) zu übertragenden Signalen und eine Balun-Einrichtung (E1, E2) umfaßt, wobei die Übertragungsleitungseinrichtung ein erstes, ein zweites und ein drittes verbundenes, leitfähiges Teil (G0/E1, G1/E1, G2/E1) umfaßt, die durch ein dielektrisches Material (50) von einem vierten leitfähigen Teil (E1) getrennt sind, das ein Teil der Balun-Einrichtung (E1, E2) ausbildet, daß zu übertragende Signale mit dem ersten Übertragungsleitungsteil (G0/E1) gekoppelt werden und daß die Schalteinrichtung einen ersten und einen zweiten Schalter (A, B) umfaßt, die auf der Übertragungsleitungseinrichtung voneinander beabstandet sind, wodurch der Betrieb des ersten und des zweiten Schalters (A, B) zum Betriebsfähigmachen der Monopolantenne (C1) es dem dritten Übertragungsleitungsteil (G2/E1) ermöglicht, die Dipolantenne (D1, D2) zu verstimmen.

2. Eine Antennenanordnung nach Anspruch 1, dadurch gekennzeichnet, daß die Übertragungsleitungseinrichtung eine Mikrostreifen-Übertragungsleitung ((G0, G1, G2)/(E1), H) umfaßt und daß das erste, das zweite, das dritte und das vierte leitfähige Teil entsprechend einen ersten, zweiten und dritten sowie vierten leitfähigen Streifen (G0, G1, G2, E1) umfaßt.

3. Eine Antennenanordnung nach Anspruch 1 oder 2, dadurch gekennzeichnet, daß der erste und der zweite Schalter (A, B) an gegenüberliegenden Enden des zweiten Übertragungsleitungsteils (G1/E1) benachbart angeordnet sind.

4. Eine Antennenanordnung nach Anspruch 3, dadurch gekennzeichnet, daß die Antennenanordnung eine Leiterplatte (12, 202) umfaßt, die das dielektrische Material (50) ausbildet, und daß die Dipolelemente (D1, D2), die Monopolantenne (C1) und die Balun-Einrichtung (E1, E2) als elektrisch leitfähige Bereiche auf der Leiterplatte (12, 202) vorgesehen sind.

5. Eine Antennenanordnung nach Anspruch 4, dadurch gekennzeichnet, daß ein passives Monopolanpassungs- und Strahlungselement (C2) als ein weiterer leitfähiger Bereich auf der Leiterplatte vorgesehen ist.

6. Eine Antennenanordnung nach Anspruch 5, dadurch gekennzeichnet, daß die erste Schalteinrichtung (A) eine erste Diode (226) umfaßt, von der ein erster Anschluß mit dem zweiten leitfähigen Streifen (G1) verbunden ist und ein zweiter Anschluß mit einem parallelgeschalteten ersten Kondensator (230) und ersten Widerstand (228) verbunden ist, die mit der Monopolantenne (C1) verbunden sind, daß die zweite Schalteinrichtung (B) eine zweite Diode (236) umfaßt, von der ein erster Anschluß mit dem zweiten leitfähigen Streifen (G1) verbunden ist und ein zweiter Anschluß über einen parallelgeschalteten zweiten Kondensator (240) und zweiten Widerstand (238) mit dem vierten leitfähigen Streifen (E1) in Verbindung steht, und daß der zweite leitfähige Streifen (G1) mit dem dritten leitfähigen Streifen (G2) über einen dritten Kondensator (250) verbunden ist.

7. Eine Antennenanordnung nach Anspruch 6, dadurch gekennzeichnet, daß eine Spule (L) zwischen den vierten leitfähigen Streifen (E1) und die Monopolantenne (C1) gekoppelt ist.

8. Eine Antennenanordnung nach Anspruch 7, dadurch gekennzeichnet, daß von einem Koaxial-Zuführkabel (F) dessen innerer Leiter mit dem ersten leitfähigen Streifen (GO) verbunden ist und dessen äußerer Leiter mit dem vierten leitfähigen Streifen (E1) verbunden ist.

## Revendications

1. Antenne équipée comprenant une première antenne (D1, D2) et une seconde antenne (C1) avec des sens de polarisation différents, caractérisée par des moyens de commutation (A, B) adaptés pour rendre opérationnelle ladite première antenne (D1, D1) ou ladite seconde antenne (C1) de manière sélective, en ce que ladite première antenne est une antenne dipôle (D1, D2) et que ladite seconde antenne est une antenne monopôle (C1), en ce que ladite antenne dipôle comprend un premier et un second éléments dipôles (D1, D2), en ce que ledit ensemble comprend des moyens de ligne d'émission (G0, G1, G2)/(E1) adaptés pour fournir les signaux à émettre audit premier et audit second éléments dipôles (D1, D2) et au symétriseur d'antenne (El, E2), tandis que ladite ligne d'émission comprend une première, une seconde et une troisième parties conductrices interconnectées (G0/E1, G1/E1, G2/E1) séparées par un matériau diélectrique (50) d'une quatrième partie conductrice (E1) faisant partie dudit symétriseur (E1, E2), en ce que les signaux à émettre sont couplés à ladite partie de ligne d'émission (G0/E1) et en ce que ledit moyen de communications comprend un premier interrupteur et une second interrupteur (A, B) espacés sur ladite ligne d'émission, tandis que le fonctionnement dudit premier et dudit second interrupteurs (A, B) pour rendre opérationnelle ladite antenne monopôle (C1) actionne ladite partie de ligne d'émission (G2/E1) pour désaccorder ladite antenne dipôle (D1, D2).

2. Antenne équipée selon la revendication 1, caractérisée en ce que ladite ligne d'émission comprend une ligne d'émission microruban ((G0, G1, G2)/(E1), H) et en ce que lesdites première, seconde, troisième et quatrième parties conductrices comprennent respectivement les première, seconde, troisième et quatrième bandes conductrices (G0, G1, G2, E1).

3. Antenne équipée selon la revendication 1 ou la revendication 2, caractérisée en ce que lesdits premier et second interrupteurs (A, B) sont situés aux côtés opposés adjacents de ladite seconde partie de ligne d'émission (G1/E1).

4. Antenne équipée selon la revendication 3, caractérisée en ce que ledit ensemble comprend une carte à circuit imprimé (12, 202) constituant ledit matériau diélectrique (50), et en ce que lesdits éléments dipôles (D1, D2), ladite antenne monopôle (C1) et ledit symétriseur (E1, E2) sont prévus comme régions électriquement conductrices sur ladite carte à circuit imprimé (12, 202).

5. Antenne équipée selon la revendication 4, caractérisée en ce qu'un élément de rayonnement et d'harmonisation monopôle passif (C2) est prévu comme zone conductrice supplémentaire sur ladite carte à circuit imprimé.

6. Antenne équipée selon la revendication 5, caractérisée en ce que ledit premier dispositif de commutation (A) comprend une première diode (226) avec une première borne connectée à ladite seconde bande conductrice (G1) et une seconde borne connectée à un premier condensateur connecté en parallèle (230) et une première résistance (228) connectée à ladite antenne monopôle (C1), en ce que ledit second moyen de commutation (B) comprend une seconde diode (236) avec une première borne connectée à ladite seconde bande conductrice (G1) et une seconde borne connectée à ladite quatrième bande conductrice (E1) par l'intermédiaire d'un second condensateur (240) et d'une seconde résistance (238) connectés en parallèle, et en ce que ladite seconde bande conductrice (G1) est connectée à ladite troisième bande conductrice (G2) par l'intermédiaire d'un troisième condensateur (250).

7. Antenne équipée selon la revendication 6, caractérisée en ce qu'un inducteur (L) est couplé entre ladite quatrième bande conductrice (E1) et ladite antenne monopôle (C1).

8. Antenne équipée selon la revendication 7, caractérisée en ce qu'un câble d'alimentation coaxial (F) voit son conducteur interne connecté à ladite bande conductrice (G0) et son conducteur externe connecté à ladite quatrième bande conductrice (E1).
